# FASCICULE DE BREVET EUROPEEN

(11) **EP 2 867 062 B1**
(45) Date de publication et mention de la délivrance du brevet: **03.08.2016**
(21) Numéro de dépôt: 13744595.3
(22) Date de dépôt: 19.06.2013
(51) Int. Cl.: B60N 2/58, B60N 2/68

(54) **ELÉMENT DE SIÈGE POUR VÉHICULE AUTOMOBILE**
SITZELEMENT FÜR EIN KRAFTFAHRZEUG
SEAT ELEMENT FOR A MOTOR VEHICLE

(30) Priorité: 29.06.2012 FR 1256231
(43) Date de publication de la demande: 06.05.2015
(73) Titulaire: Peugeot Citroën Automobiles SA, 78140 Vélizy Villacoublay (FR)
(72) Inventeur: PINTO TEIXEIRA, Frederic, F-91160 Ballainvilliers (FR); DUTOT, Christophe, F-94400 Vitry Sur Seine (FR); THIEL, Marc, F-25400 Exincourt (FR); COMBEAU, Frederic, F-25750 Desandans (FR)
(74) Mandataire: Jeannin, Laurent Jean-Pierre
(86) Numéro de dépôt international: PCT/FR2013/051429
(87) Numéro de publication internationale: WO 2014/001690

(56) Documents cités:
- WO-A1-2004/014690
- DE-A1- 3 535 353
- FR-A1- 2 686 553
- US-A- 3 981 534

## Description

### Domaine de l'invention

La présente invention concerne un élément de siège pour véhicule automobile, de type comportant une armature supportant une matelassure adaptée à être recouverte par une coiffe d'habillage.

Elle vise plus particulièrement le cas où cette armature présente un rebord profilé conformé pour coopérer par inter-engagement avec un organe d'accrochage relié à la coiffe.

### Arrière-plan de l'invention

Les éléments de siège de ce type sont utilisés généralement comme élément de dossier d'une banquette arrière de véhicule rabattable entre un position sensiblement verticale de séparation entre le coffre et l'habitacle du véhicule, et une position sensiblement horizontale de prolongement du plancher de ce coffre.

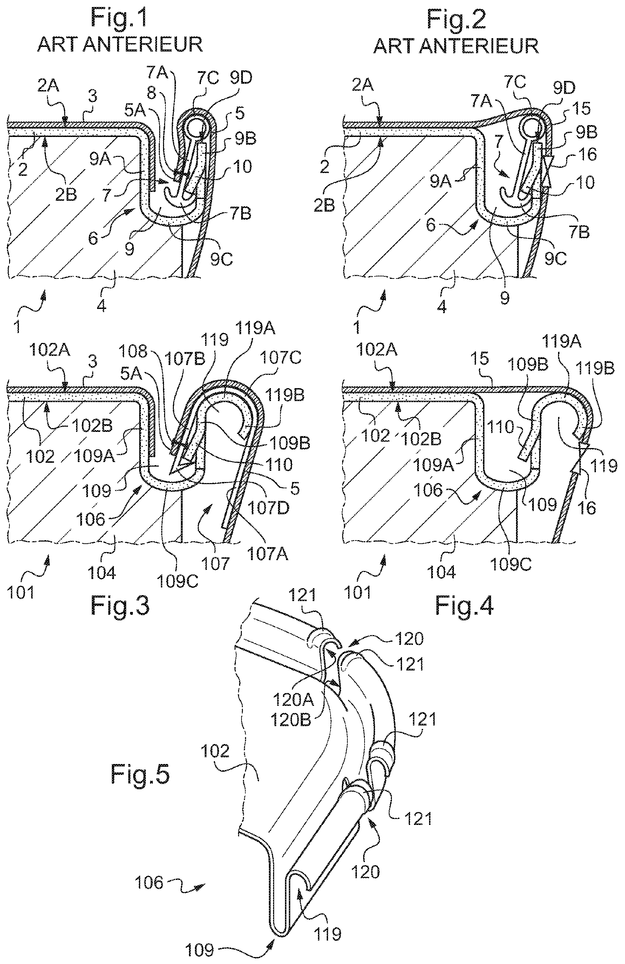

On va maintenant décrire plus en détails un tel élément de siège conforme à l'art antérieur, à l'appui des figures 1 et 2 annexées sur lesquelles :
- la figure 1 représente une vue partielle en coupe transversale de cet élément de siège dans une configuration où son armature est recouverte d'un revêtement de type moquette tandis que sa matelassure est recouverte d'une coiffe d'habillage ; et
- la figure 2 représente une vue similaire de cet élément de siège dans une configuration différente où son armature et sa matelassure sont recouvertes d'une housse en tissu.

Comme illustré sur la figure 1, l'élément de siège 1 comporte une armature 2 formée en tôle métallique emboutie et présentant une forme générale de plaque nervurée dont la face externe 2A est ici recouverte d'un revêtement collé de type moquette 3, tandis que sa face interne 2B supporte une matelassure 4.

Le rebord périphérique profilé 6 de l'armature 2 présente une section en forme de U définissant une gorge 9 qui présente une première branche 9A raccordée à la partie principale de l'armature 2, une seconde branche 9B sensiblement de même longueur et parallèle à la branche 9A, ainsi qu'une base 9C arrondie reliant les deux branches 9A, 9B.

La matelassure 4 est recouverte par une coiffe d'habillage 5 accrochée au rebord périphérique 6 de l'armature 2 à l'aide d'un organe d'accrochage 7 constitué par un profilé dont la section rappelle celle d'une ancre marine.

Le bord 5A de la coiffe d'habillage 5 est fixé à la barre centrale 7A de l'organe d'accrochage 7 par une ligne de couture 8.

L'organe d'accrochage 7 est inséré dans la gorge 9 de sorte à ce que le bord 5A de la coiffe d'habillage 5 fixé à l'organe 7 regarde vers la première branche 9A de la gorge 9 raccordée à la partie principale de l'armature 2.

Le maintien de l'organe d'accrochage 7 dans la gorge 9 est assuré par la coopération entre une multitude de petites crevées 10 disposées le long de la seconde branche 9B de la gorge 9, et l'un des bras latéraux recourbés 7B de l'organe 7.

Ces crevées 10 et ce bras 7B sont disposés et orientés de telle façon qu'ils se trouvent en regard l'un de l'autre et que toute tendance de l'organe 7 à se dégager de la gorge 9 se traduise par une butée mutuelle des crevées 10 contre le bras 7B maintenant la coiffe d'habillage 5.

La coiffe 5 est rabattue autour d'une âme cylindrique 7C formant l'extrémité externe de l'organe d'accrochage 7 et qui saille de la gorge 9. Cette âme cylindrique 7C permet ainsi d'éviter que la coiffe 5 ne repose directement sur l'extrémité saillante de l'armature 2 formée par l'extrémité libre 9D de la seconde branche 9B de la gorge 9. Une telle configuration pourrait en effet provoquer des blessures sérieuses aux occupants du véhicule en cas d'accident, notamment si la tête de l'un deux venait à entrer violement en contact avec le siège en position repliée.

La figure 2 représente le même élément de siège 1 dans une configuration spécifique aux véhicules d'entrée de gamme dans laquelle l'armature 2 et la matelassure 4 sont recouvertes par une simple housse de tissu 15 fermée par une fermeture à glissières 16.

Bien que l'organe 7 n'assure plus ici sa fonction d'accrochage, ce dernier demeure indispensable car son âme cylindrique 7C permet de protéger les occupants en cas d'accident conformément à la réglementation relative aux sièges rabattables de véhicules. Celle-ci impose en effet que les parties arrière du siège présentent un profil arrondi dont le rayon de courbure soit supérieur ou égal à 3,2 mm (ECE17, FMVSS207 lorsque le dossier est en position relevée rabattue, et ECE21, FMVSS201 lorsque le dossier est en position relevée).

Malheureusement, la présence de cet organe 7 dans la gorge 9 entraîne un surcoût de fabrication et une augmentation sensible du temps de montage du fait des difficultés de mise en place de cet organe 7 par l'opérateur sur la chaîne de montage.

On connaît par le document DE3535353 qui correspond au préambule de la revendication 1 un élément de siège pour véhicule automobile comprenant une armature dont la face interne porte une matelassure apte à être recouverte par une coiffe d'habillage. Le rebord périphérique profilé de l'armature présente une gorge proximale à section en forme de U.

On connaît par le document US3981534 un organe prévu pour l'accrochage d'une coiffe d'habillage sur une armature d'un élément de siège.

### Objet et résumé de l'invention

La présente invention vise donc à proposer un tel élément de siège pour véhicule automobile compatible avec l'ensemble des versions d'un véhicule et dont la mise en oeuvre soit particulièrement économique dans les versions d'entrée de gamme.

Elle propose à cet effet un élément de siège pour véhicule automobile selon la revendication 1.

Le fait de prolonger l'ancienne extrémité libre saillante de la gorge proximale à section en U par une telle seconde gorge distale en forme de J renversé, permet, tout en respectant les normes de sécurité actuelles proscrivant les bords ou arêtes saillantes, de s'affranchir de la mise en place d'un organe supplémentaire dans les configurations de siège d'entrée de gamme pour lesquelles l'armature et la matelassure sont recouvertes par une simple housse de tissu fermée par une fermeture à glissières.

En effet, l'armature de l'élément de siège selon l'invention n'offre plus d'extrémité saillante tournée vers l'extérieur, mais présente au contraire une forme incurvée naturellement protectrice pour les occupants en cas d'accident.

En évitant de recourir à un tel organe supplémentaire dans ce type de configuration, l'élément de siège selon l'invention permet ainsi de réduire les coûts de fabrication tout en entraînant également un gain de temps précieux lors du montage sur la chaîne de production.

Selon des caractéristiques préférées de l'élément de siège, prises seules ou en combinaison :
- ladite base du J de la seconde gorge distale présente un rayon de courbure externe supérieur ou égal à 3,2 mm ;
- ladite base du J présente un rayon de courbure externe compris entre 3,2 et 3,7 mm ;
- le jambage de plus petite longueur du J de la seconde gorge distale est incurvé en direction du jambage de plus grande longueur qui est confondu avec une branche du U de la gorge proximale ;
- le rayon de courbure externe dudit jambage de plus petite longueur est identique à celui de ladite base du J ;
- le jambage de plus petite longueur du J de la seconde gorge distale est rectiligne et s'étend sensiblement parallèlement au jambage de plus grande longueur ;
- ladite armature est réalisée en tôle métallique emboutie et ledit rebord périphérique présente au niveau de chacun de ses coins, au moins une découpe transversale ; et/ou
- ledit rebord périphérique présente sur sa face externe, des bossages s'étendant parallèlement et à proximité des bords latéraux d'une dite découpe transversale.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 3 représente une vue partielle en coupe transversale d'un élément de siège selon l'invention dans une configuration où son armature est recouverte d'un revêtement de type moquette tandis que sa matelassure est recouverte d'une coiffe d'habillage;
- la figure 4 représente une vue similaire de l'élément de siège de la figure 1 dans une configuration différente où son armature et sa matelassure sont recouvertes d'une housse en tissu ; et
- La figure 5 représente une vue de trois-quarts en perspective de l'une des zones en coin de l'élément de siège selon l'invention.

### Description détaillée d'un mode de réalisation

L'élément de siège 101 selon l'invention est similaire à celui décrit précédemment à l'aide des figures 1 et 2, à l'exception du rebord périphérique 106 de l'armature 102.

Dans la suite et sur les figures 3 à 5, on a gardé les mêmes références pour les éléments identiques et on a ajouté 100 aux références des éléments similaires.

Comme illustré sur la figure 3, l'élément de siège 101 comporte une armature 102 présentant une forme générale de plaque nervurée dont la face externe 102A est ici recouverte d'un revêtement collé de type moquette 3, tandis que sa face interne 102B supporte une matelassure 104.

Le rebord périphérique profilé 106 de l'armature 102 présente une section en forme de S qui définie deux gorges 109 et 119 orientées dans des sens opposés.

La première gorge proximale 109 est semblable à la gorge 9 de l'élément de siège 1 décrit précédemment. Sa section est en forme de U et présente une première branche 109A raccordée à la partie principale de l'armature 102, une seconde branche 109B sensiblement de même longueur et parallèle à la branche 109A, ainsi qu'une base 109C arrondie reliant les deux branches 109A, 109B.

La seconde gorge distale 119 présente une section en forme de J renversé comprenant un premier jambage confondu avec la seconde branche 109B de la gorge proximale 109, un second jambage 119A de plus petite longueur et incurvé en direction de la branche 109B, ainsi qu'une base 119B présentant un rayon de courbure externe égal à 3,2 mm.

Comme illustré sur la figure 3, le rayon de courbure du second jambage 119A est de préférence identique à celui de la base 119B.

D'autre part, l'armature 102 étant réalisée ici en tôle métallique emboutie, son rebord périphérique 106 présente au niveau de chacun de ses quatre coins, deux découpes transversales 120 afin de permettre à la tôle de se déployer sans déchirure lors de l'emboutissage (figure 5).

Ce rebord périphérique 106 présente également sur sa face externe, des bossages 121 à proximité de chacun des bords latéraux 120A, 120B de ces découpes 120.

Plus précisément, chaque bossage 121 s'étend le long de la base 119B et du second jambage 119A de la gorge distale 119 du rebord périphérique 106, parallèlement à un bord latéral correspondant 120A, 120B.

La matelassure 104 est recouverte par une coiffe d'habillage 5 accrochée au rebord périphérique 106 de l'armature 102 à l'aide d'un organe d'accrochage 107 constitué par un profilé dont la section est en forme de J inversé.

Cette forme en J inversé présente un premier jambage 107A, un second jambage 107B de plus petite longueur et sensiblement parallèle au jambage 107A, ainsi qu'une base 107C présentant un rayon de courbure interne sensiblement égal au rayon de courbure externe de la base 119B de la seconde gorge distale 119 du rebord périphérique 106 de l'armature 102.

Le bord 5A de la coiffe d'habillage 5 est fixé au second jambage 107B de l'organe d'accrochage 107 par une ligne de couture 108, cette coiffe 5 étant ensuite rabattue autour de la face externe de l'organe d'accrochage 107.

Cet organe d'accrochage 107 est superposé sur la face externe de la seconde gorge distale 119 du rebord périphérique 106, de sorte à ce que le bord 5A de la coiffe d'habillage 5 fixé à l'organe 107 regarde vers la première branche 109A de la première gorge proximale 109 raccordée à la partie principale de l'armature 102.

Le maintien de l'organe d'accrochage 107 est assuré par la coopération entre une multitude de petites crevées 110 disposées le long de la seconde branche 109B de la gorge proximale 109, et un ardillon 107D situé à l'extrémité libre du second jambage 107B de l'organe d'accrochage 107.

Ces crevées 110 et cet ardillon 107D sont disposés et orientés de telle façon qu'ils se trouvent en regard l'un de l'autre et que toute tendance de l'organe 107 à se dégager de la gorge 109 se traduise par une butée mutuelle des crevées 110 contre l'ardillon 107D maintenant la coiffe d'habillage 5.

Il est à noter que l'élément de siège 101 selon l'invention peut coopérer avec d'autres types d'organes d'accrochages profilés dont les sections présentent des formes différentes. Notamment, et bien que son âme cylindrique 7C ne présente plus d'intérêt particulier, l'organe d'accrochage 7 décrit précédemment demeure parfaitement compatible avec l'élément de siège 101 qui vient d'être décrit.

La figure 4 représente le même élément de siège 101 selon l'invention dans une configuration spécifique aux véhicules d'entrée de gamme dans laquelle l'armature 102 et la matelassure 104 sont recouvertes par une simple housse de tissu 15 fermée par une fermeture à glissières 16.

Dans cette configuration particulière, aucun organe supplémentaire tel que les organes 7 ou 107 décrits précédemment n'est nécessaire. En effet, il n'est alors plus nécessaire d'accrocher la housse 15 recouvrant intégralement l'élément de siège 101 au rebord périphérique 106 de l'armature 102 de cet élément. De plus, grâce à son profil en forme de S, ce rebord périphérique 106 ne présente plus d'extrémité saillante tournée vers la housse 15, mais présente au contraire une forme arrondie dont le rayon de courbure répond aux exigences de la réglementation internationale en matière de sièges de véhicules automobiles.

D'autre part, lorsque l'armature 102 est réalisée en tôle métallique emboutie et que son rebord périphérique 106 présente alors au niveau de chacun de ses quatre coins, les deux découpes transversales 120 illustrées sur la figure 5, la présence des bossages 121 à proximité de chacun des bords latéraux 120A, 120B de ces découpes 120 permet de protéger les occupants du véhicule en cas d'accident.

En effet, en cas de choc frontal d'un occupant contre l'un des quatre coins de l'élément de siège 101, son front viendrait buter contre les deux bossages 121 entourant la découpe 120 correspondante, ces derniers empêchant ainsi la tête du passager d'entrer violement en contact avec les bords latéraux vifs 120A, 120B de cette découpe 120 conformément aux exigences réglementaires.

Selon une variante non représentée, le rayon de courbure externe de la base 119B est différent, par exemple compris entre 3,2 et 3,7 mm.

Selon une autre variante non représentée, l'armature est réalisée par moulage de sorte que les coins de son rebord périphérique ne présentent ni découpes transversales ni bossages.

Selon encore une autre variante non représentée, le nombre de découpes situées au niveau des coins du rebord périphérique de l'armature est différent de deux, par exemple égal à un ou à trois.

Bien entendu, la présente invention ne se limite pas aux formes de réalisation décrites et représentées, mais elle englobe toute autre variante d'exécution.

## Revendications

1. Elément de siège pour véhicule automobile comprenant une armature (102) dont la face interne (102B) porte une matelassure (104) apte à être recouverte par une coiffe d'habillage (5), le rebord périphérique profilé (106) de ladite armature (102) présentant une gorge proximale à section en forme de U (109) adaptée pour coopérer par inter-engagement avec un organe d'accrochage (7 ; 107) disposé dans ladite gorge (109) et relié à une dite coiffe d'habillage (5) ;
ledit rebord périphérique (106) présentant une section en forme de S qui définit ladite gorge proximale (109) et une seconde gorge distale (119) à section en forme de J renversé, orientée en sens opposé à ladite gorge proximale (109) et dont la base (119A) du J est incurvée, ledit élément de siège étant **caractérisé en ce que** le jambage de plus petite longueur (119B) du J de la seconde gorge distale (119) est incurvé en direction du jambage de plus grande longueur qui est confondu avec une branche (109B) du U de la gorge proximale (109) ou en ce que le jambage de plus petite longueur (119B) du J de la seconde gorge distale (119) est rectiligne et s'étend sensiblement parallèlement au jambage de plus grande longueur (109B).

2. Elément de siège selon la revendication 1, **caractérisé en ce que** ladite base (119A) du J de la seconde gorge distale (119) présente un rayon de courbure externe supérieur ou égal à 3,2 mm.

3. Elément de siège selon la revendication 2, **caractérisé en ce que** ladite base (119A) du J présente un rayon de courbure externe compris entre 3,2 et 3,7 mm.

4. Elément de siège selon la revendication 4, **caractérisé en ce que** le rayon de courbure externe dudit jambage de plus petite longueur (119B) est identique à celui de ladite base (119A) du J.

5. Elément de siège selon l'une des revendications 1 à 4, **caractérisé en ce que** ladite armature (102) est réalisée en tôle métallique emboutie, et **en ce que** ledit rebord périphérique (106) présente au niveau de chacun de ses coins, au moins une découpe transversale (120).

6. Elément de siège selon la revendication 5, **caractérisé en ce que** ledit rebord périphérique (106) présente sur sa face externe, des bossages (121) s'étendant parallèlement et à proximité des bords latéraux (120A, 120B) d'une dite découpe transversale (120).

## Patentansprüche

1. Sitzelement für Kraftfahrzeug, das eine Bewehrung (102) aufweist, deren Innenseite (102B) eine Polsterung (104) trägt, die angepasst ist, um von einer Verkleidungshaube (5) abgedeckt zu werden, wobei die umfängliche profilierte Krempe (106) der Bewehrung (102) eine proximale Nut mit U-Querschnittform (109) aufweist, die angepasst ist, um durch gegenseitiges Eingreifen mit einem Anhängerorgan (7; 107), das in der Nut (109) angeordnet und mit der Verkleidungshaube (5) verbunden ist, zusammenzuwirken,
wobei die umfängliche Krempe (106) einen Querschnitt in S-Form aufweist, der die proximale Nut (109) definiert, und eine zweite distale Nut (119) mit Querschnitt in umgedrehter J-Form, die in die entgegengesetzte Richtung zu der proximalen Nut (109) ausgerichtet ist, und deren Basis (119A) des J gebogen ist, Sitzelement **dadurch gekennzeichnet, dass** der Schenkel mit kleinerer Länge (119B) des J der zweiten distalen Nut (119) in die Richtung des Schenkels mit größerer Länge gebogen ist, der mit einem Zweig (109B) des U der proximalen Nut (109) zusammenfällt, oder dass der Schenkel mit kleinerer Länge (119B) des J der zweiten distalen Nut (119) geradlinig ist und sich im Wesentlichen parallel zu dem Schenkel mit größerer Länge (109B) erstreckt.

2. Sitzelement nach Anspruch 1, **dadurch gekennzeichnet, dass** die Basis (119A) des J der zweiten distalen Nut (119) einen äußeren Krümmungsradius größer oder gleich 3,2 mm aufweist.

3. Sitzelement nach Anspruch 2, **dadurch gekennzeichnet, dass** die Basis (119A) des J einen äußeren Krümmungsradius zwischen 3,2 und 3,7 mm aufweist.

4. Sitzelement nach Anspruch 4, **dadurch gekennzeichnet, dass** der äußere Krümmungsradius des Schenkels mit kleinerer Länge (119B) mit dem der Basis (119A) des J identisch ist.

5. Sitzelement nach einem der Ansprüche 1 bis 4, **dadurch gekennzeichnet, dass** die Bewehrung (102) aus gestanztem Blech hergestellt ist, und dass die periphere Krempe (106) im Bereich ihrer Ecken mindestens einen Querausschnitt (120) aufweist.

6. Sitzelement nach Anspruch 5, **dadurch gekennzeichnet, dass** die umfängliche Krempe (106) auf ihrer Außenseite Höcker (121) aufweist, die sich parallel zu und in der Nähe der Seitenränder (120A, 120B) eines der Querausschnitte (120) erstrecken.

## Claims

1. A seat element for a motor vehicle including a reinforcement (102), the inner face (102B) of which carries cushioning (104) suitable for being covered by a trim cover (5), the profiled peripheral edge (106) of said reinforcement (102) having a proximal groove of U-shaped section (109) designed to cooperate by inter-engagement with a hooking member (7; 107) disposed in said groove (109) and linked to a said trim cover (5);
said peripheral edge (106) having an S-shaped section which defines said proximal groove (109) and a second distal groove (119) having an inverted J-shaped section, oriented in the opposite direction to said proximal groove (109) and of which the base (119A) of the J is curved, said seat element being **characterized in that** the leg having the smallest length (119B) of the J of the second distal groove (119) is curved in the direction of the leg having the greatest length, which is aligned with a branch (109b) of the U of the proximal groove (109) or **in that** the leg having the smallest length (119B) of the J of the second distal groove (119) is rectilinear and extends substantially parallel to the leg of greatest length (109B).

2. The seat element according to Claim 1, **characterized in that** said base (119A) of the J of the second distal groove (119) has an external radius of curvature greater than or equal to 3.2 mm.

3. The seat element according to Claim 2, **characterized in that** said base (119A) of the J has an external radius of curvature comprised between 3.2 and 3.7 mm.

4. The seat element according to Claim 4, **characterized in that** the external radius of curvature of the said leg having the smallest length (119B) is identical to that of said base (119A) of the J.

5. The seat element according to one of Claims 1 to 4, **characterized in that** said reinforcement (102) is made from stamped metal sheet, and **in that** said peripheral edge (106) has at the level of each of its corners at least one transverse cutout (120).

6. The seat element according to Claim 5, **characterized in that** said peripheral edge (106) has, on its external face, bosses (121) extending in a parallel manner and close to the lateral edges (120A, 120B) of a said transverse cutout (120).
